# EUROPEAN PATENT APPLICATION

(11) **EP 4 546 522 A1**
(43) Date of publication of application: **30.04.2025**
(21) Application number: 24169961.0
(22) Date of filing: 12.04.2024
(51) Int. Cl.: H01M 50/204

(54) **BATTERY CELL HOLDER**

(30) Priority: 27.10.2023 KR 20230145755
(71) Applicant: Samsung SDI Co., Ltd., Yongin-si, Gyeonggi-do 17084 (KR)
(72) Inventor: KIM, Jun Seop, 16678 Suwon-si (KR); MOON, Dae Yon, 16678 Suwon-Si (KR)
(74) Representative: Marks & Clerk LLP

(57) **Abstract**

The present disclosure is directed to providing a battery cell holder capable of further reducing the resistance of an adhesive liquid when a battery cell is assembled to a structure of a lower side of a battery. The battery cell holder includes a cell support in which a plurality of battery cells are fitted and seated, a through-hole formed through the cell support and into which an adhesive liquid is introduced, and a guide groove formed on the cell support to extend in a seated direction of the battery cell, coming into contact with the through-hole and configured to form a passage through which the adhesive liquid can flow along a side surface of the battery cell.

## Description

### BACKGROUND

### 1. Field of the Invention

The present disclosure relates to a battery cell holder.

### 2. Discussion of Related Art

In general, as the demand for portable electronic products such as laptops, video cameras, mobile phones, and the like rapidly increases, and the commercialization of robots, electric vehicles, and the like becomes fully fledged, research on battery modules and battery packs that can be repeatedly charged and discharged is actively underway.

A lower portion of a battery module or a battery pack is selectively provided with a structure such as a case, a holder, a carrier, and the like. A structural and heat-conductive glue, gapfiller, and the like (hereinafter, referred to as "liquid adhesives") are used in the structure of a lower side of the battery to reinforce rigidity and enhance cooling functions. However, due to the resistance of the adhesive liquid filled in the structure of the lower side of the battery, there has been difficulty in seating and assembling a battery cell on the structure of the lower side of the battery cell.

The above-described information disclosed in the technology that forms the background of the present disclosure is only intended to improve understanding of the background of the present disclosure, and thus may include information that does not constitute the related art.

### SUMMARY OF THE INVENTION

An aspect of embodiments of the present disclosure is directed to providing a battery cell holder capable of further reducing the resistance of an adhesive liquid when a battery cell is assembled to a structure of a lower side of a battery.

These and other aspects and features of the present disclosure will be described in or will be apparent from the following description of some embodiments of the present disclosure.

According to one or more embodiments, a battery cell holder includes: a cell support to which a plurality of battery cells are fitted and seated, a through-hole formed through the cell support and into which an adhesive liquid is introduced, and a guide groove formed on the cell support to extend in a seated direction of the battery cell, coming into contact with the through-hole, and configured to form a passage through which the adhesive liquid is flowable along a side surface of the battery cell.

The cell support may include a first support portion extending along an edge portion of the battery cell and coming into contact with a side surface of the battery cell, and a second support portion formed at a lower portion of the first support portion and coming into contact with a lower portion of the battery cell.

The first support portion may include a partition portion, formed in a position where the two battery cells face each other, and having a form of a fence capable of partitioning a disposition space of the plurality of battery cells, and a column portion, formed in a position where the three or more battery cells face each other, and having a form of a column that is capable of filling a separation space between the battery cells.

The column portion may include a lower column portion having a shape corresponding to a separation space between the battery cells, and an upper column portion formed on an upper portion of the lower column portion, and having a shape that narrows in width toward an upper portion.

The upper column portion may include an inclined surface formed to be inclined in a position facing the battery cell.

The guide groove may be formed to extend continuously from the lower column portion to the inclined surface.

The cell support may further include a third support portion, which has a height higher than the second support portion and extends along a direction of arrangement of the battery cell and is in contact with a side surface of the battery cell.

The battery cells may include a first row in which a first battery cell and a second battery cell are arranged in a first direction, and a second row disposed adjacent to the first row, and in which a third battery cell and a fourth battery cell are arranged in the first direction and the third battery cell and the fourth battery cell are disposed in a zigzag configuration with the first battery cell and the second battery cell, and the third support portion may include a first curved portion curved along a side surface of the first battery cell and extending between the first battery cell and the third battery cell, a second curved portion curved along a side surface of the third battery cell and extending between the second battery cell and the third battery cell, and a third curved portion curved along a side surface of the second battery cell and extending between the second battery cell and the fourth battery cell.

The third support portion may include an extension wall portion extending along the direction of arrangement of the battery cell, and an extension column portion extending upward from the first support portion and connected to a side surface of the extension wall portion.

The battery cell holder may further include a flow groove formed to be recessed in a lower portion of the cell support, coming into contact with the plurality of through-holes, and configured to form a passage through which the adhesive liquid is flowable from one of the through-holes to the other of the through-holes.

The cell support may include a partition portion having a form of a fence capable of partitioning a disposition space of the battery cell, and a column portion having a form of a column capable of filling a separation space between the battery cells and in which the guide groove is formed, and the flow groove may be formed in a lower portion of the column portion to communicate with the guide groove.

The flow groove may include a recessed portion formed to be recessed upward in a lower portion of the column portion, and an opening portion formed to be open in a transverse direction in a side portion of the recessed portion, and coming into contact with the through-hole and the guide groove.

The battery cell holder may further include a seating protrusion formed to protrude upward on the cell support, and configured to form a separation space between a lower portion of the battery cell and the cell support to allow the adhesive liquid to be introduced.

The cell support may include a first support portion coming into contact with a side surface of the battery cell, and a second support portion coming into contact with the lower portion of the battery cell, and the seating protrusion may be formed on an upper surface portion of the second support portion.

The seating protrusion may include a protrusion body having a set thickness that allows the lower portion of the battery cell to be spaced from the second support portion, and a set width that allows the battery cell to be supported, a first connection portion formed in a lower portion of the protrusion body and connected to the second support portion, and a second connection portion formed in a side portion of the protrusion body and connected to the first support portion.

At least some of the above and other features of the invention are set out in the claims.

In accordance with one or more embodiments of the present disclosure, since a guide groove forms a passage for an adhesive liquid that can flow along a side surface of a battery cell, the adhesive liquid can flow upward or downward along the side surface of the battery cell while being guided by the guide groove depending on a pressing force applied when the battery cell is fitted and seated in a cell support.

In accordance with one or more embodiments of the present disclosure, the adhesive liquid that comes into contact with the side surface of the battery cell during the process of the battery cell being inserted to a lower portion of a battery cell holder can be dispersed and flow upward and downward while being guided by the guide groove. Thereafter, the adhesive liquid that comes into contact with the lower portion of the battery cell during the process of the battery cell being moved further downwardly to be seated in the battery cell holder can be pushed to an edge portion of the battery cell and then moved upward while being guided by the guide groove.

In accordance with one or more embodiments of the present disclosure, the resistance caused by the adhesive liquid during the assembly of inserting and seating the battery cell in the battery cell holder can be reduced, and the assembly of the battery cell can be more easily performed.

In accordance with one or more embodiments of the present disclosure, after the assembly of seating the battery cell in the battery cell holder is completed, the adhesive liquid can naturally flow downwardly while being guided by the guide groove by an own weight of the adhesive liquid, and at the same time, air that is mixed in the adhesive liquid can be discharged through the guide groove.

In accordance with one or more embodiments of the present disclosure, the amount of air mixed in the adhesive liquid can be reduced, thereby minimizing the occurrence of a separation space between the battery cell holder, the battery cell, and a cooling tray due to the introduction of air.

In accordance with one or more embodiments of the present disclosure, the adhesive liquid can be densely and tightly filled in the separation space between the battery cell holder, the battery cell, and the cooling tray, so that the rigidity of the battery module or battery pack can be further enhanced when the adhesive liquid is cured.

In accordance with one or more embodiments of the present disclosure, when a thermally conductive material is applied to the adhesive liquid, the cooling function through the cooling tray can be further improved.

In accordance with one or more embodiments of the present disclosure, a lower portion of the battery cell can not only be in contact with the adhesive liquid filled in a lower portion of the battery cell holder, but the side surface of the battery cell can also be in contact with the adhesive liquid filled in the guide groove. Accordingly, when the adhesive liquid is cured, the bonding force between the battery cell holder and the battery cell can be further enhanced.

In accordance with one or more embodiments of the present disclosure, since the flow groove may connect a plurality of through-holes to communicate with each other, the adhesive liquid can flow freely through a space between the through-holes through the flow groove depending on the pressing force applied when the battery cell is fitted and seated on the cell support. Accordingly, during the assembly of inserting and seating the battery cell in the battery cell holder, the resistance caused by the adhesive can be reduced, and the assembly of the battery cell can be more easily performed.

In accordance with one or more embodiments of the present disclosure, since a seating protrusion may form a separation gap that allows the adhesive liquid to be introduced between the lower portion of the battery cell and the battery cell holder, the bonding between the lower portion of the battery cell holder and the battery cell can be more clear and robust by the adhesive liquid that is introduced into a space between the lower portion of the battery cell and the cell support.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view of main components schematically illustrating one embodiment of a battery module according to one embodiment of the present disclosure;
FIG. 2 is a plan view of FIG. 1;
FIG. 3 is an exploded perspective view of the main components of FIG. 1;
FIG. 4 is a perspective view of main components schematically illustrating a battery cell holder according to one embodiment of the present disclosure;
FIG. 5 is a perspective view of main components schematically illustrating the battery cell holder according to one embodiment of the present disclosure, in a different direction from FIG. 4;
FIG. 6 is a perspective view of main components schematically illustrating the battery cell holder according to one embodiment of the present disclosure, in a different direction from FIGS. 4 and 5;
FIG. 7 is a plan view of FIG. 4;
FIG. 8 is a front view of FIG. 4;
FIG. 9 is a side view of FIG. 4;
FIG. 10 is a bottom view of FIG. 4;
FIG. 11 is an enlarged view of part A in FIG. 4;
FIG. 12 is an enlarged view of part B in FIG. 6; and
FIG. 13 is an enlarged view of part C in FIG. 7.

### DETAILED DESCRIPTION OF EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

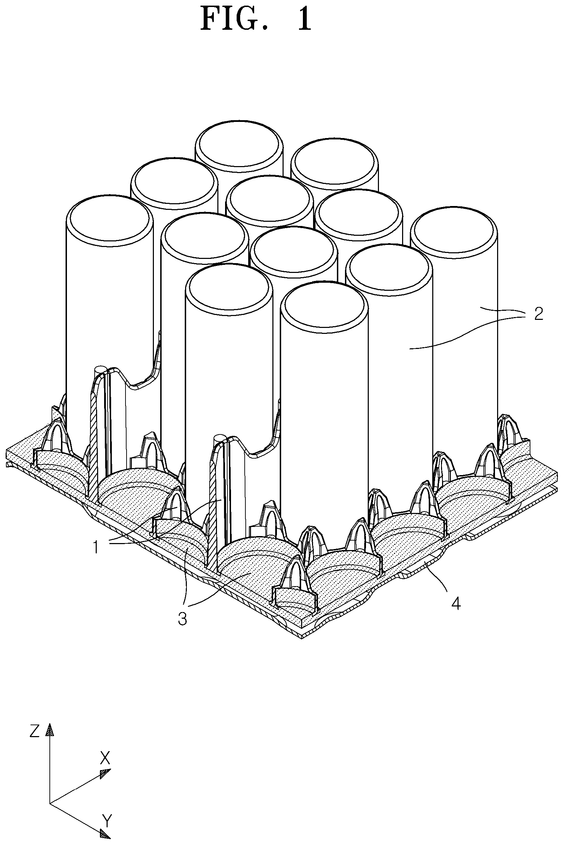

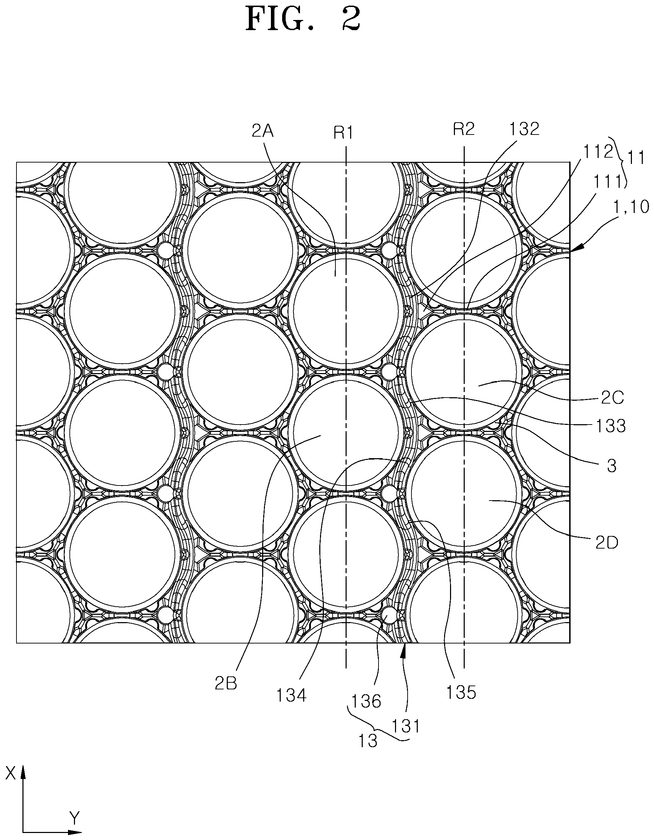

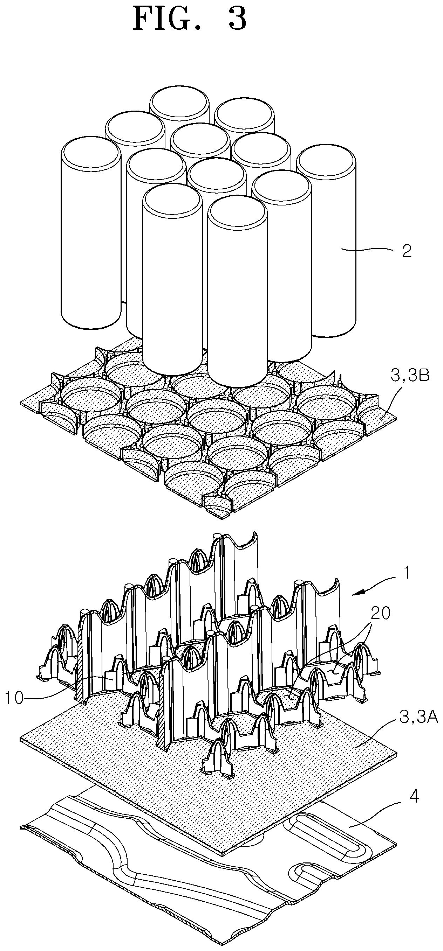

FIG. 1 is a perspective view of main components schematically illustrating one embodiment of a battery module according to one embodiment of the present disclosure, FIG. 2 is a plan view of FIG. 1, and FIG. 3 is an exploded perspective view of the main components of FIG. 1.

In the drawings of the present disclosure, X, Y, and Z directions are indicated. In the description of the present disclosure, for convenience, the X direction is set to a rearward direction or a front-rear direction, the Y direction is set to a rightward direction or a left-right direction, and the Z direction is set to an upward direction or an up-down direction to describe the structure and disposition relationship of the components of the present disclosure.

With reference to FIGS. 1 to 3, the battery module (a reference numeral not illustrated) according to one embodiment of the present disclosure may include a battery cell holder 1, a battery cell 2, an adhesive liquid 3, and a cooling tray 4.

The battery cell holder 1 may have a tray shape capable of supporting a plurality of battery cells 2 from a lower side of the battery cells. The plurality of battery cells 2 may be seated in designated positions on the battery cell holder 1. The plurality of battery cells 2 may be arranged in a set configuration with a set spacing while seated in the battery cell holder 1.

The plurality of battery cells 2 may include a first battery cell 2A, a second battery cell 2B, a third battery cell 2C, a fourth battery cell 2D, and the like. The plurality of battery cells 2 including the first battery cell 2A, the second battery cell 2B, the third battery cell 2C, and the fourth battery cell 2D may be erected upright in an up-down direction (e.g., have their longitudinal direction arranged along the Z direction). In the description of the present disclosure, the first battery cell 2A, the second battery cell 2B, the third battery cell 2C, and the fourth battery cell 2D are intended to refer to the plurality of battery cells 2 as distinct from each other, and are not intended to refer to a specific position, form, or function of the battery cells 2.

With reference to FIG. 2, the first battery cell 2A and the second battery cell 2B may be arranged in a front-rear direction (e.g., adjacent to each other in the X direction) to form a first row R1. The third battery cell 2C and the fourth battery cell 2D may be arranged in the front-rear direction to form a second row R2. The second row R2 may be disposed adjacent to the right (e.g., in the Y direction) of the first row R1. The third battery cell 2C and the fourth battery cell 2D may be disposed in a zigzag configuration with the first battery cell 2A and the second battery cell 2B (e.g., the first row R1 may be offset in the X direction relative to the second row R2 to define a zigzag configuration).

The plurality of battery cells 2 may be connected to each other while seated in the battery cell holder 1 having a tray shape corresponding to one battery module. The battery cell holder 1 may be seated on an upper portion of or within the cooling tray 4. The cooling tray 4 may be made of a thermally conductive material. While the battery cell holder 1 is seated in the cooling tray 4, the adhesive liquid 3 may be introduced into the battery cell holder 1 side.

With reference to FIG. 3, the battery cell holder 1 includes a cell support 10 configured to support the plurality of battery cells 2, and a through-hole 20 formed through the cell support 10 in the up-down direction (Z direction). A portion 3A of the adhesive liquid 3 may be received (e.g., positioned or inserted) between a bottom surface portion of the cell support 10 of the battery cell holder 1 and the cooling tray 4. Another portion 3B of the adhesive liquid 3 may be received (e.g., positioned or inserted) inside the through-hole 20 of the battery cell holder 1, and may be received inside the cell support 10 from an upper side of the through-hole 20 of the battery cell holder 1, e.g., lower portions of the cell support 10 may be between the first and second portions 3A and 3B of the adhesive liquid 3 in the Z direction.

The plurality of battery cells 2 are moved from an upper side to a lower side (e.g., inserted into the cell support 10 along the Z direction), and may be seated on an upper surface portion of the cell support 10 (e.g., positioned in a region overlapping the through-hole 20 and covered by the portion 3B of the adhesive liquid 3). If the battery cell 2 is seated on the cell support 10 (e.g., with the portion 3B of the adhesive liquid 3 between the cell support 10 and a surface of the battery cell 2), some of the adhesive liquid 3 may be pressed against a bottom surface of the battery cell 2, flow toward a side surface of the battery cell 2, and flow upward along the side surface of the battery cell 2.

At the time the adhesive liquid 3 was introduced into the battery cell holder 1 side, air may have been introduced between the adhesive liquid 3, the cell support 10, and the cooling tray 4. By sequentially seating the battery cell 2 in the battery cell holder 1, a downward pressing force is uniformly applied to the adhesive liquid 3 at a plurality of positions, and the air mixed in the adhesive liquid 3 is discharged to the outside of the adhesive liquid 3. In addition, as the adhesive liquid 3 that has flowed upward along the side surface of the battery cell 2 naturally flows downwardly by an own weight of the adhesive liquid 3, the air mixed in the adhesive liquid 3 is discharged to the outside of the adhesive liquid 3.

Such an operation may minimize the occurrence of a separation space between the battery cell holder 1, the battery cell 2, and the cooling tray 4 due to the introduction of air, and enable the adhesive liquid 3 to be filled densely and tightly in the separation space between the battery cell holder 1, the battery cell 2, and the cooling tray 4. The adhesive liquid 3 may be made of a flowable material, and may be cured after flowing as described above. As described above, the adhesive liquid 3 may be used to firmly connect a lower portion of the plurality of battery cells 2, the battery cell holder 1, and the cooling tray 4 to each other.

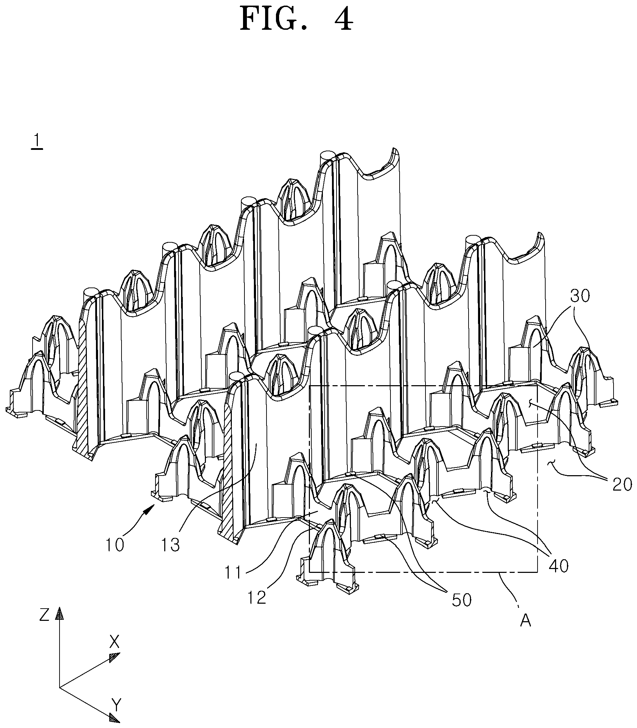

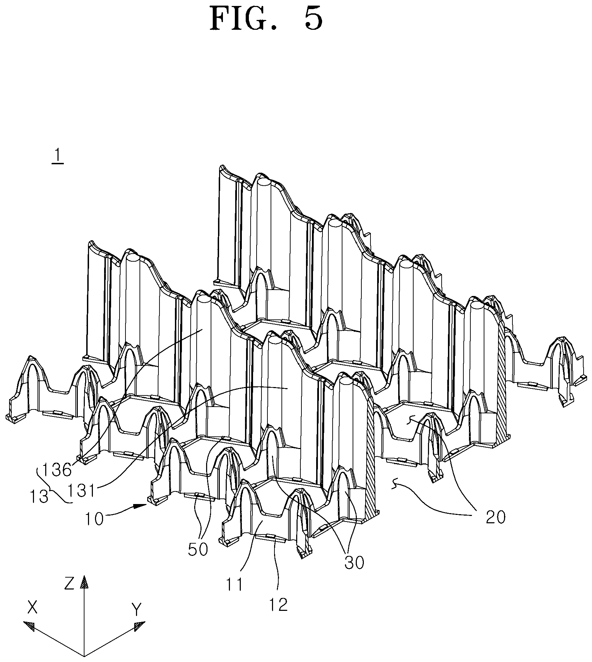

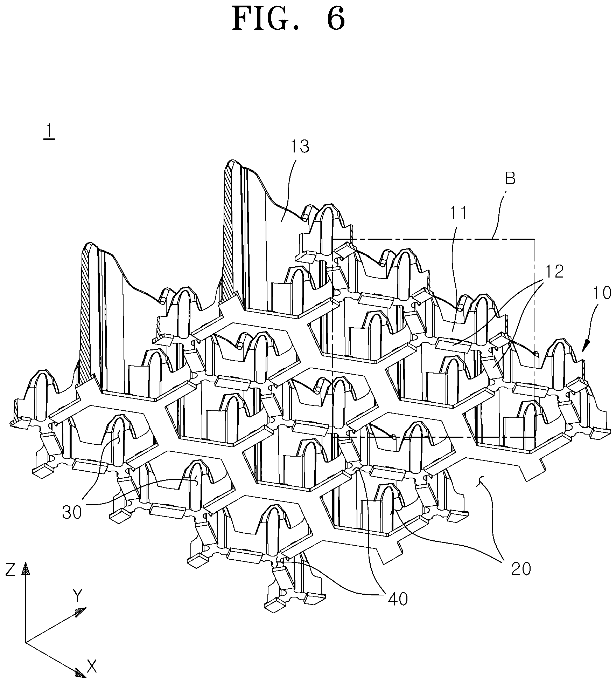

FIG. 4 is a perspective view of main components schematically illustrating a battery cell holder according to one embodiment of the present disclosure, FIG. 5 is a perspective view of main components schematically illustrating the battery cell holder according to one embodiment of the present disclosure in a different direction from FIG. 4, FIG. 6 is a perspective view of main components schematically illustrating the battery cell holder according to one embodiment of the present disclosure in a different direction from FIGS. 4 and 5, and FIG. 7 is a plan view of FIG. 4.

With reference to FIGS. 4 to 7, the battery cell holder 1 according to one embodiment of the present disclosure includes the cell support 10, the through-hole 20, and a guide groove 30. The battery cell holder 1 according to one embodiment of the present disclosure may further include a flow groove 40 and a seating protrusion 50.

The cell support 10 has a shape that allows the plurality of battery cells 2 to be fitted and seated therein. The cell support 10 may have the form of a plate-shaped tray as a whole. The plurality of battery cells 2 may be seated in designated positions on the cell support 10.

The through-hole 20 is formed through the cell support 10. The through-hole 20 is formed at a position corresponding to a lower portion of each of the plurality of battery cells 2. The adhesive liquid 3 may be introduced and received in the through-hole 20. The adhesive liquid 3 on a lower side of the cell support 10 may flow to an upper side of the cell support 10 through the through-hole 20, and the adhesive liquid 3 on the upper side of the cell support 10 may flow to the lower side of the cell support 10.

A width of the through-hole 20 may correspond to or may be less than a width of the lower portion of the battery cell 2. As the width of the through-hole 20 increases, the amount of adhesive liquid 3 received in the through-hole 20 may be increased, and a facing area between the battery cell 2 and the cooling tray 4 may be expanded.

The guide groove 30 is formed to extend on the cell support 10 in a seated direction (Z direction) of the battery cell 2, e.g., the guide groove 30 may be formed along a side surface of the cell support 10 that faces the through-hole 20 and may extend above the through-hole 20 in the Z direction. The battery cell 2 may be moved from an upper side to a lower side (-Z direction) and seated on the cell support 10, and the guide groove 30 may be formed to extend on the cell support 10 in the up-down direction (Z direction). A portion of the guide groove 30 is in contact with an edge portion of the through-hole 20. A lower portion of the guide groove 30 may be in contact with the edge portion of the through-hole 20.

The guide groove 30 forms a passage through which the adhesive liquid 3 may flow along the side surface of the battery cell 2. When the battery cell 2 is fitted and seated in the cell support 10, the adhesive liquid 3, which is positioned on the upper side of the through-hole 20, is pressed against the battery cell 2 and pushed and moved toward the side surface of the battery cell 2, and may flow upward along the side surface of the battery cell 2 while being guided by the guide groove 30 (e.g., the adhesive liquid 3 may be in direct contact with the side surface of the battery cell 2 and with the guide groove 30).

Some of the adhesive liquid 3 may be positioned on the upper side of the cell support 10 through the process of introducing the adhesive liquid 3 into the cell support 10, or through the process of assembling the battery cell 2 to the cell support 10. The adhesive liquid 3, which is positioned on the upper side of the cell support 10, may naturally flow downwardly toward the through-hole 20 by the own weight of the adhesive liquid 3 while being guided by the guide groove 30. As described above, the adhesive liquid 3 may flow smoothly upward or downward while being guided by the guide groove 30 during the process of assembling the battery module, and may be eventually stabilized in a state of flowing downwardly toward the through-hole 20 as much as possible by the own weight of the adhesive liquid 3.

The flow groove 40 may be formed to be recessed in a lower portion of the cell support 10 and may be in contact with the plurality of through-holes 20, e.g., a portion of the flow groove 40 may be under the guide groove 30 and may be in fluid communication with the guide groove 30 and with the through-hole 20. The plurality of through-holes 20 may be formed in the cell support 10 (e.g., through the bottom of the cell support 10), and the flow groove 40 may be formed to be recessed upward in the lower portion of the cell support 10 (e.g., recessed in a portion of the sidewall of the cell support 10 to connect between adjacent through-holes 20). One end of the flow groove 40 may be in contact with (e.g., in fluid communication with) an edge portion of one through-hole 20, and the other end of the flow groove 40 may be in contact with an edge portion of another through-hole 20.

The plurality of through-holes 20 may be connected to communicate with each other by the flow groove 40. The flow groove 40 may form a passage through which the adhesive liquid 3 may flow from one through-hole 20 to another through-hole 20. By increasing the number of flow grooves 40, more through-holes 20 may be connected to communicate with each other, and the adhesive liquid 3 may flow between more through-holes 20. In addition, by increasing the number of flow grooves 40 formed between a pair (e.g., a single pair) of through-holes 20, the adhesive liquid 3 may flow more smoothly between the through-holes 20 in proportion to the increased number of flow grooves 40.

The seating protrusion 50 may be formed to protrude upward on a portion of the cell support 10 that faces the lower portion of the battery cell 2 (corresponding to a second support portion 12 to be described below). The battery cell 2 may be spaced apart upward from the second support portion 12 while being seated on the seating protrusion 50.

A separation space, into which the adhesive liquid 3 may be introduced, may be formed between the lower portion of the battery cell 2 and the second support portion 12 by the seating protrusion 50. The adhesive liquid 3 may be introduced between the lower portion of the battery cell 2 and the second support portion 12 (e.g., between the bottom surface of the battery cell 2 and the second support portion 12).

Accordingly, compared to an embodiment in which the seating protrusion 50 is not formed, a separation space corresponding to an area of an upper surface portion of the second support portion 12 excluding an area of the seating protrusion 50 may be additionally formed. The coupling between the second support portion 12 and the lower portion of the battery cell 2 may be made clearer and more robust by the adhesive liquid 3 introduced between the second support portion 12 and the battery cell 2.

With reference to FIGS. 4 to 7, the cell support 10 according to one embodiment of the present disclosure may include a first support portion 11, a second support portion 12, and a third support portion 13.

The first support portion 11 and the second support portion 12 may extend along an edge portion of the battery cell 2. The battery cell 2 may have a circumferential shape, and the first support portion 11 may be formed to extend in the form of a circle or polygon corresponding to an edge portion of the lower portion of the battery cell 2 (e.g., the first support portion 11 may surround an entire lower sidewalls of the battery cell 2).

The plurality of battery cells 2 may be arranged in plural rows and plural columns. The first support portion 11 and the second support portion 12 may have a shape capable of supporting edge portions of the plurality of battery cells 2 arranged in plural rows and plural columns. The first support portion 11 and the second support portion 12 may have the form that a plurality of pieces are continuously connected in plural rows and plural columns.

The first support portion 11 may be in contact (e.g., direct contact) with the side surface of the battery cell 2. The first support portion 11 may extend in a continuous circular or polygonal shape along the side surface of the battery cell 2. The second support portion 12 may be formed to protrude toward the through-hole 20 in a lower portion of the first support portion 11, and may be in contact with the lower portion of the battery cell 2 (e.g., the second support portion 12 may vertically overlap only a periphery of the bottom surface of the battery cell 2 and contact the bottom of the battery cell 2 via the seating protrusion 50). The plurality of second support portions 12 may be spaced apart at a set interval along the edge portion of the battery cell 2.

The third support portion 13 may be formed to extend along a direction of arrangement of the battery cell 2 with a height that is higher than the first support portion 11, e.g., the third support portion 13 may extend continuously between two adjacent rows of battery cells 2. The third support portion 13 may be in contact with the side surface of the battery cell 2 over a larger area than the first support portion 11, with a height that is higher than the first support portion 11. If the battery cell 2 has an arrangement of two or more rows, by forming the third support portion 13 to extend in the direction of arrangement of the battery cells 2, the tilting or flow of the battery cell 2 may be more reliably constrained

The third support portion 13 may be formed to extend along a direction of arrangement of the battery cell 2 with a height that is higher than the second support portion 12. The third support portion 13 may be in contact with the side surface of the battery cell 2 over a larger area than the second support portion 12, with a height that is higher than the second support portion 12. When the battery cell 2 has an arrangement of two or more rows, by forming the third support portion 13 to extend in the direction of arrangement of the battery cell 2, the tilting or flow of the battery cell 2 may be more reliably constrained.

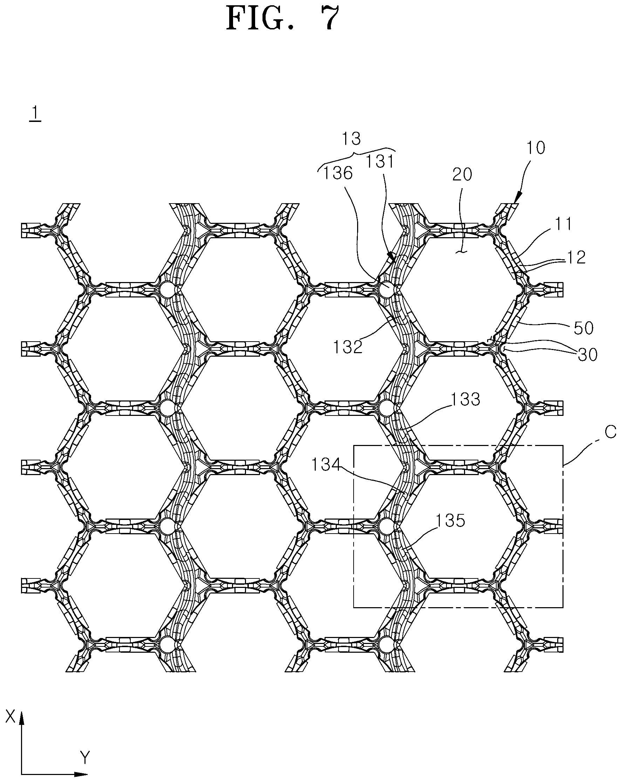

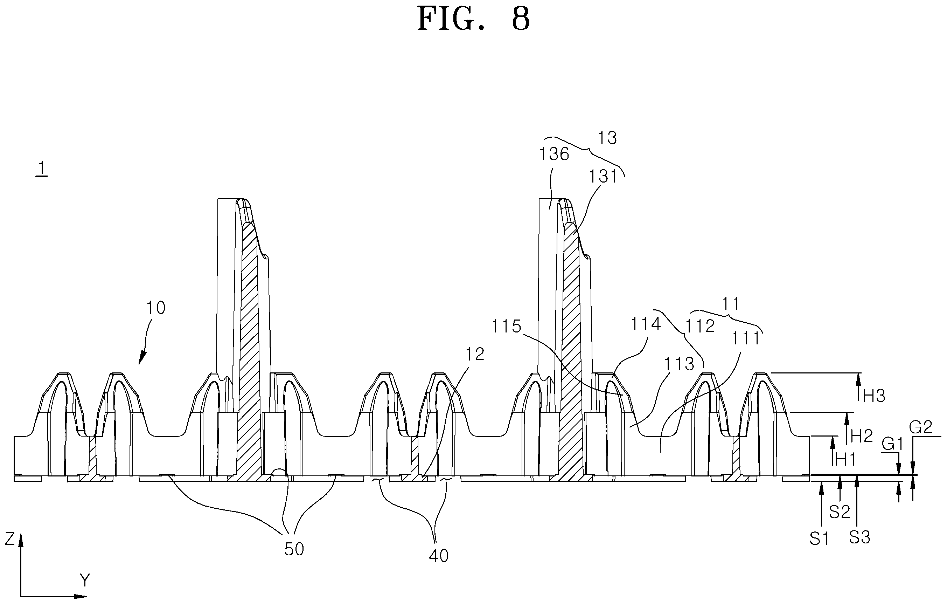

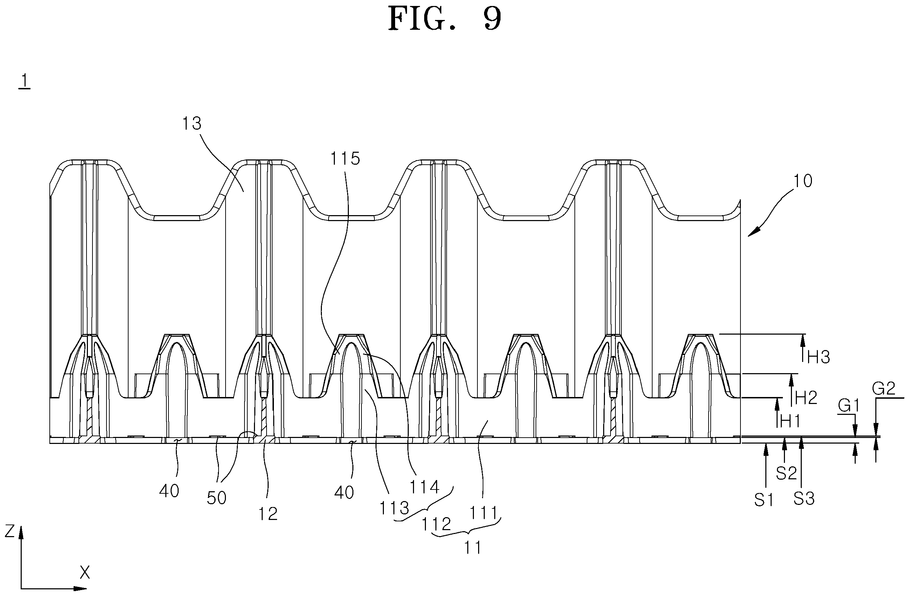

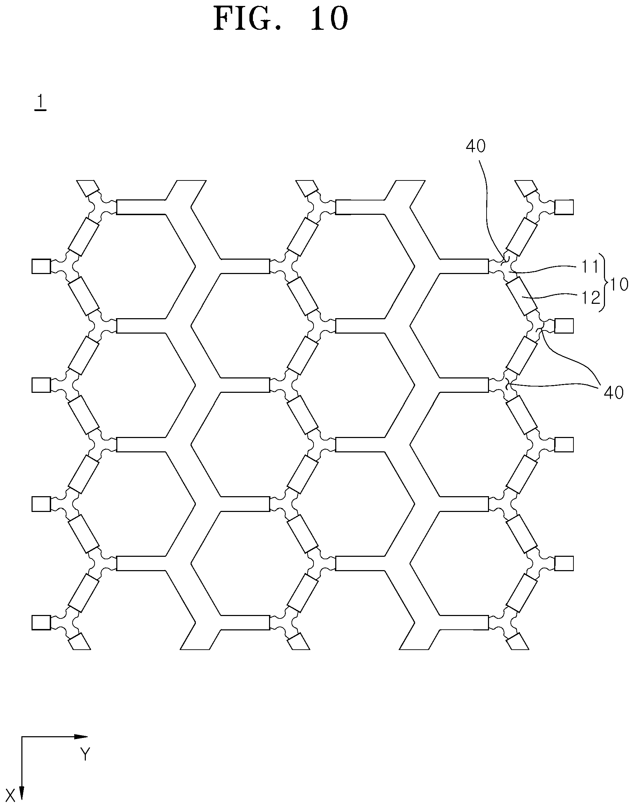

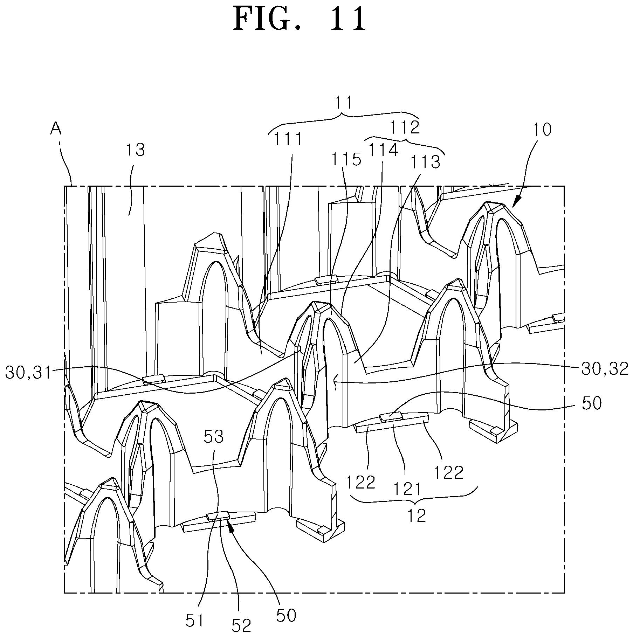

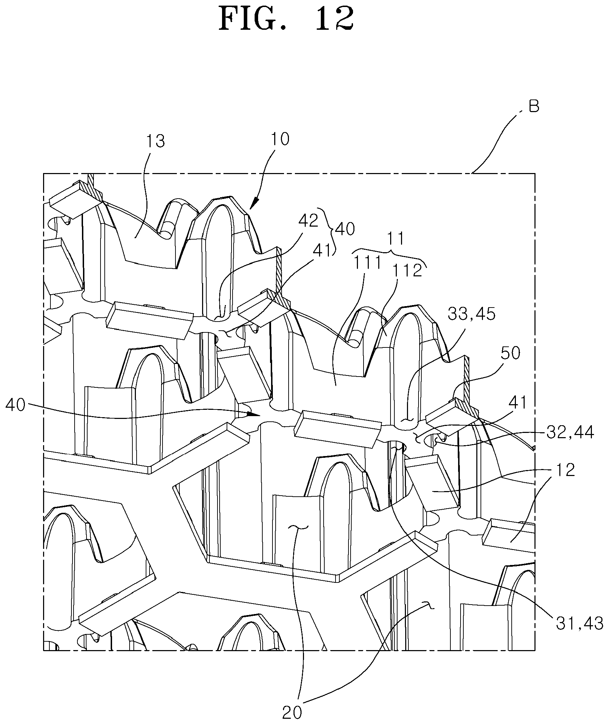

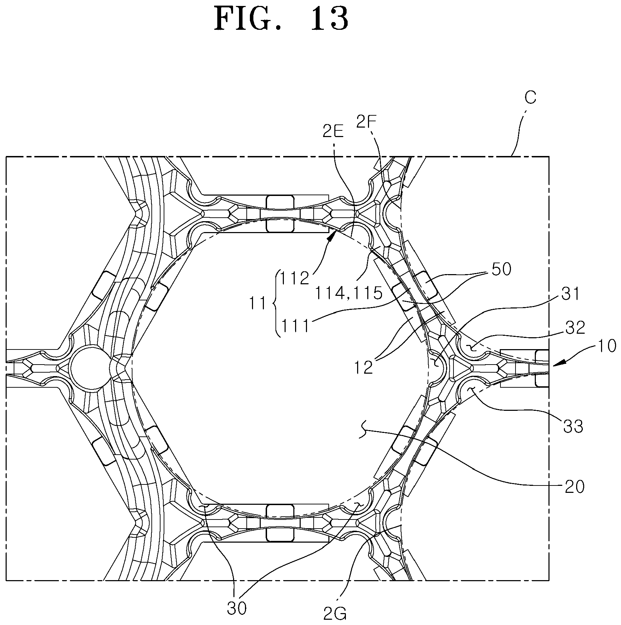

FIG. 8 is a front view of FIG. 4, FIG. 9 is a side view of FIG. 4, and FIG. 10 is a bottom view of FIG. 4. FIG. 11 is an enlarged view of part A in FIG. 4, FIG. 12 is an enlarged view of part B in FIG. 6, and FIG. 13 is an enlarged view of part C in FIG. 7.

With reference to FIGS. 11 to 13, the first support portion 11 according to one embodiment of the present disclosure may include a partition portion 111 and a column portion 112.

The partition portion 111 may have the form of a fence capable of partitioning a disposition space of the plurality of battery cells 2. The partition portion 111 has the form of a fence, which may have various shapes depending on the form of the battery cell 2. When the battery cell 2 has a circumferential shape, the partition portion 111 may have a curved surface corresponding to the side surface of the battery cell 2.

The plurality of battery cells 2 may include a fifth battery cell 2E, a sixth battery cell 2F, a seventh battery cell 2G, and the like. The plurality of battery cells 2 including the fifth battery cell 2E, the sixth battery cell 2F, and the seventh battery cell 2G may be erected upright in the up-down direction (Z direction). In the description of the present disclosure, the fifth battery cell 2E, the sixth battery cell 2F, and the seventh battery cell 2G are intended to refer to the plurality of battery cells 2 as distinct from each other, and are not intended to refer to a specific position, form, or function of the battery cells 2.

The partition portion 111 may be formed in a position where two battery cells 2 face each other, e.g., between two adjacent battery cells 2. With reference to FIG. 13, the partition portion 111 may be positioned between the fifth battery cell 2E and the sixth battery cell 2F to partition a disposition space of the fifth battery cell 2E and the sixth battery cell 2F. Another partition portion 111 may be positioned between the sixth battery cell 2F and the seventh battery cell 2G to partition a disposition space of the sixth battery cell 2F and the seventh battery cell 2G. Still another partition portion 111 may be positioned between the fifth battery cell 2E and the seventh battery cell 2G to partition a disposition space of the fifth battery cell 2E and the seventh battery cell 2G.

The column portion 112 may be formed in the form of a column between the partition portions 111 that is higher than the partition portions 111, e.g., in the Z direction relative to the second support portion 12. The column portion 112 may be formed in a position where three or more battery cells 2 face each other. The column portion 112 may have a width and shape corresponding to a separation space formed between three or more battery cells 2, e.g., the column portion 112 may fill a space between three or more battery cells 2. The column portion 112 may have a greater width and thickness than the partition portion 111, e.g., in each of the X and Y directions. The cell support 10 may secure rigidity to constrain the flow (e.g., movement) of the battery cell 2 by the column portion 112.

There may be one or more column portions 112 for one battery cell 2. The column portions 112 may be provided in plural for one battery cell 2, and may be disposed at a set interval along a circumference of the battery cell 2. One battery cell 2 may be disposed at a position spatially partitioned from another neighboring battery cell 2 by the plurality of partition portions 111. In addition, the battery cell 2 may be constrained from flowing (e.g., moving) stably by being supported from the side surface in multiple directions by the column portion 112.

With reference to FIG. 13, one battery cell 2 may be disposed adjacent to six other battery cells 2. Six column portions 112 may be disposed along a circumference of one battery cell 2. The plurality of column portions 112 may be integrally connected with the six partition portions 111 while being alternately disposed. The plurality of column portions 112 may be disposed in each of the XY direction, the Y direction, the -X.Y direction, the -X -Y direction, the -Y direction, and the X -Y direction with respect to one battery cell 2, and may have the same disposition interval with each other.

With reference to FIGS. 8, 9, and 11, the column portion 112 according to one embodiment of the present disclosure may include a lower column portion 113 and an upper column portion 114.

The lower column portion 113 may have a shape and width corresponding to a separation space between the battery cells 2. The lower column portion 113 may be continuously connected to the partition portion 111. The upper column portion 114 may be formed to protrude upwardly from an upper portion of the lower column portion 113.

When the partition portion 111 is formed with a first height H1, the lower column portion 113 may be formed with a second height H2 that is higher than the first height H1. The upper column portion 114 may have a third height H3 that is higher than the second height H2. The plurality of partition portions 111 and lower column portions 113 are disposed alternately with each other and may form a shape of a side surface corresponding to the side surface of the battery cell 2. The side surface of one battery cell 2 may be supported by the plurality of partition portions 111 and the plurality of lower column portions 113 having a higher height than the partition portions.

The upper column portion 114 may have a shape that narrows in width toward an upper portion thereof. Accordingly, in the process of inserting the battery cell 2 into the battery cell holder 1, the battery cell 2 may smoothly enter a set space (position) formed by the partition portion 111 and the lower column portion 113 along a side surface of the upper column portion 114 without being caught on an upper surface portion of the column portion 112. In addition, the adhesive liquid 3 that has flowed to an upper side of the upper column portion 114 may naturally flow downwardly toward the through-hole 20 by the own weight of the adhesive liquid 3 along a surface of the upper column portion 114.

The upper column portion 114 may include an inclined surface 115 formed to be inclined in a position facing the battery cell 2. When one column portion 112 is disposed to face three battery cells 2, the inclined surface 115 may be formed in a position facing each of the three battery cells 2. When one column portion 112 is disposed to face three battery cells 2, three inclined surfaces 115 may be formed, and the three inclined surfaces 115 may have relative angles corresponding to 120°.

With reference to FIG. 13, the column portion 112 may be positioned between the fifth battery cell 2E, the sixth battery cell 2F, and the seventh battery cell 2G, and three inclined surfaces 115 may be formed to face each of the fifth battery cell 2E, the sixth battery cell 2F, and the seventh battery cell 2G. The battery cell 2 may be naturally guided to a position of the fifth battery cell 2E along one of the three inclined surfaces 115 and be inserted and seated. The battery cell 2 may be naturally guided to a position of the sixth battery cell 2F along another of the three inclined surfaces 115 and be inserted and seated. The battery cell 2 may be naturally guided to a position of the seventh battery cell 2G along still another of the three inclined surfaces 115 and be inserted and seated.

The guide groove 30 may be formed to extend continuously from a lower end of the lower column portion 113 to the inclined surface 115. The adhesive liquid 3 that has flowed to the upper side of the upper column portion 114 may flow down along the surface of the upper column portion 114, or may flow down along the inclined surface 115 and may be naturally introduced into the guide groove 30 through an open upper portion of the guide groove 30. The adhesive liquid 3 introduced into the guide groove 30 may naturally flow downwardly while being guided by the guide groove 30 toward the through-hole 20. Such an operation may improve a filling density of the adhesive liquid 3 that is filled between the battery cell holder 1, the lower portion of the battery cell 2, and the cooling tray 4.

The seating protrusion 50 may be formed to protrude upwardly from an upper portion of the second support portion 12. The second support portion 12 may include a portion in which the seating protrusion 50 is formed, and a portion in which the seating protrusion 50 is not formed. The second support portion 12 may be formed with a set thickness on the lower portion of the first support portion 11, and at least a portion thereof may be formed to protrude toward the through-hole 20. With reference to FIGS. 8 and 9, the second support portion 12 may have a first thickness G1.

With reference to FIG. 11, the second support portion 12 according to one embodiment of the present disclosure may include a rigidity reinforcing portion 121 in which the seating protrusion 50 is formed, and an adhesive reinforcing portion 122 in which the seating protrusion 50 is not formed.

The seating protrusion 50 may be formed to protrude upwardly from an upper portion of the rigidity reinforcing portion 121. The seating protrusion 50 may have a second thickness G2. The rigidity reinforcing portion 121 may be reinforced in rigidity by the second thickness G2 by the seating protrusion 50. The seating protrusion 50 may be positioned at a middle portion of an extending direction of the second support portion 12. The rigidity reinforcing portion 121 may implement as much rigidity as the sum of the first thickness G1 and the second thickness G2 together with the seating protrusion 50.

The adhesive reinforcing portion 122 may be formed on one side or both sides of the rigidity reinforcing portion 121. When the rigidity reinforcing portion 121 is formed in the middle portion of the second support portion 12, the adhesive reinforcing portion 122 may be formed on both sides of the rigidity reinforcing portion 121. When the rigidity reinforcing portion 121 is formed to be biased on one side of the second support portion 12, the adhesive reinforcing portion 122 may be formed to be biased on the other side thereof.

Since the battery cell 2 is seated on the seating protrusion 50, the adhesive reinforcing portion 122 may be spaced apart from the lower portion (e.g., from the bottom surface) of the battery cell 2. The seating protrusion 50 may have the second thickness G2, and a separation gap corresponding to the second thickness G2 may be formed between the battery cell 2 and the adhesive reinforcing portion 122. The adhesive liquid 3 may be introduced into the separation gap corresponding to the second thickness G2. A separation space between the adhesive reinforcing portion 122 and the battery cell 2 may be in contact with the through-hole 20. The adhesive reinforcing portion 122 may be connected to communicate with (e.g., be in fluid communication with) an edge portion of an upper portion of the through-hole 20.

A contact area between the battery cell 2, the second support portion 12, and the adhesive liquid 3 may be further expanded by an area corresponding to an upper surface of the adhesive reinforcing portion 122 by forming the seating protrusion 50, compared to an embodiment in which the seating protrusion 50 is not formed. Accordingly, a bonding force between the battery cell holder 1 and the battery cell 2 by the adhesive liquid 3 may be further enhanced.

With reference to FIGS. 2, 7, and 8, the third support portion 13 according to one embodiment of the present disclosure may include an extension wall portion 131 and an extension column portion 136.

The extension wall portion 131 may extend along the direction of arrangement of the battery cells 2. The extension wall portion 131 may have a height that is higher than the column portion 112, e.g., relative to the second support portion 12. The extension wall portion 131 may include a first curved portion 132, a second curved portion 133, a third curved portion 134, and a fourth curved portion 135. The extension wall portion 131 may be formed by continuously connecting the first curved portion 132, the second curved portion 133, the third curved portion 134, and the fourth curved portion 135.

The first curved portion 132 and the second curved portion 133 may be curved in different directions. The third curved portion 134 and the fourth curved portion 135 may be curved in different directions. The first curved portion 132 and the third curved portion 134 may be curved in the same direction as each other. The second curved portion 133 and the fourth curved portion 135 may be curved in same directions.

With reference to FIG. 2, the first battery cell 2A and the second battery cell 2B may be arranged in the front-rear direction (X direction) to form the first row R1. The third battery cell 2C and the fourth battery cell 2D may be arranged in the front-rear direction to form the second row R2. The second row R2 may be disposed adjacent to the right (Y direction) of the first row R1. The third battery cell 2C and the fourth battery cell 2D may be disposed in a zigzag configuration with the first battery cell 2A and the second battery cell 2B.

The first curved portion 132 may be curved along a side surface of the first battery cell 2A and extend between the first battery cell 2A and the third battery cell 2C. The first curved portion 132 may be curved to the right (Y direction) and in contact with the column portion 112 of the first support portion 11 on the right. The second curved portion 133 may be curved along a side surface of the third battery cell 2C and extend between the second battery cell 2B and the third battery cell 2C. The second curved portion 133 may be curved to the left (-Y direction) and in contact with the column portion 112 of the first support portion 11 on the left.

The third curved portion 134 may be curved along a side surface of the second battery cell 2B and extend between the second battery cell 2B and the fourth battery cell 2D. The third curved portion 134 may be curved to the right and in contact with the column portion 112 of the first support portion 11 on the right. The fourth curved portion 135 may be curved to the left along a side surface of the fourth battery cell 2D, and in contact with the column portion 112 of the first support portion 11 on the left.

As the extension wall portion 131 extends in the front-rear direction (X direction) along the first row R1 and the second row R2, and has a shape that is curved in a direction (Y direction) other than the extending direction, a contact area with the plurality of battery cells 2 may be further expanded and bending rigidity may be further enhanced compared to an embodiment that extends in a straight line.

In addition, the curved portions of the extension wall portion 131 may be integrally connected with the column portion 112 of the first support portion 11 at a plurality of positions and orientations. Accordingly, the extension wall portion 131 can secure rigidity and stably maintain the upright state. The extension wall portion 131 may be supported by the extension column portion 136 in addition to the column portion 112.

The extension column portion 136 may be formed to extend upward from an upper portion of the column portion 112. The extension wall portion 131 may have a height that is higher than the column portion 112, and the extension column portion 136 may extend upward to a height corresponding to an upper end portion of the extension wall portion 131. The extension column portion 136 may be integrally connected to a side surface of the extension wall portion 131. A lower portion of the extension wall portion 131 may be firmly supported by the plurality of column portions 112, and an upper portion of the extension wall portion 131 may be firmly supported by the extension column portions 136.

The column portion 112 may be positioned between the fifth battery cell 2E, the sixth battery cell 2F, and the seventh battery cell 2G. With reference to FIG. 13, the guide groove 30 according to one embodiment of the present disclosure may include a first guide groove 31, a second guide groove 32, and a third guide groove 33.

The first guide groove 31 may be formed in a portion of the column portion 112 that faces the fifth battery cell 2E. The second guide groove 32 may be formed in a portion of the column portion 112 that faces the sixth battery cell 2F. The third guide groove 33 may be formed in a portion of the column portion 112 that faces the sixth battery cell 2F. The first guide groove 31, the second guide groove 32, and the third guide groove 33 may be formed to extend continuously from a lower end portion of the lower column portion 113 to the inclined surface 115.

The side surface of one battery cell 2 is in contact with the plurality of column portions 112, and by forming the guide groove 30 in each of the column portions 112, one battery cell 2 may be in contact with the plurality of guide grooves 30. The number of guide grooves 30 facing one battery cell 2 may increase in proportion to the number of column portions 112. The plurality of guide grooves 30 may be in contact with one battery cell 2 in various directions corresponding to each of the plurality of column portions 112.

The adhesive liquid 3 may be filled inside the guide groove 30. The side surface of the battery cell 2 may be more closely adhered to the cell support 10, more specifically the first support portion 11, and even more specifically the column portion 112, by the adhesive liquid 3 filled inside the guide groove 30. The contact area between the battery cell 2, the first support portion 11, and the adhesive liquid 3 may be further expanded to correspond to the width, length, and number of the guide grooves 30 by forming the guide grooves 30, compared to an embodiment in which the guide grooves 30 are not formed. Accordingly, the bonding force between the battery cell holder 1 and the battery cell 2 by the adhesive liquid 3 may be further enhanced.

The flow groove 40 may be formed to be recessed upward in a bottom surface portion of the column portion 112. An edge portion of the flow groove 40 may be in contact with the edge portion of the through-hole 20, and may be formed to be open toward the through-hole 20. The plurality of through-holes 20 may be connected to communicate with each other by the flow groove 40. The plurality of through-holes 20 and the plurality of flow grooves 40 may together form a continuously connected spatial portion.

The edge portion of the flow groove 40 may be in contact with (e.g., in fluid communication with) the lower portion of the guide groove 30. The edge portion of the flow groove 40 may be in contact with the lower portion of the guide groove 30 in addition to coming into contact with the through-hole 20. The plurality of through-holes 20 and the plurality of guide grooves 30 may be connected to communicate with each other by the flow groove 40. The plurality of through-holes 20, the plurality of guide grooves 30, and the plurality of flow grooves 40 may together form a continuously connected spatial portion.

With reference to FIGS. 6, 10, and 12, the flow groove 40 according to one embodiment of the present disclosure may include a recessed portion 41 and an opening portion 42. The recessed portion 41 may be formed to be recessed upward in a lower end portion of the column portion 112. The opening portion 42 may be formed to be open in a side portion of the recessed portion 41 in the transverse direction. The opening portion 42 may be in contact with (e.g., in fluid communication with) the through-hole 20 and the guide groove 30.

The opening portion 42 according to one embodiment of the present disclosure may include a first opening portion 43, a second opening portion 44, and a third opening portion 45. The first opening portion 43 may be formed to be open in a portion of the recessed portion 41 that is in contact with one through-hole 20 in the transverse direction. The second opening portion 44 may be formed to be open in a portion of the recessed portion 41 that is in contact with another through-hole 20 in the transverse direction. The third opening portion 45 may be formed to be open in a portion of the recessed portion 41 that is in contact with still another through-hole 20 in the transverse direction.

As shown above, the first opening portion 43, the second opening portion 44, and the third opening portion 45 may be in contact with three through-holes 20, respectively. In addition, the first opening portion 43, the second opening portion 44, and the third opening portion 45 may be in contact with the first guide groove 31, the second guide groove 32, and the third guide groove 33, respectively. One opening portion 42 may be in contact with one through-hole 20 and one guide groove 30 simultaneously. One opening portion 42 may be in contact with one through-hole 20 in a lateral direction, while coming into contact with one guide groove 30 in an upward side thereof.

By forming three opening portions 42 in one flow groove 40, one flow groove 40 may be connected to communicate mutually with three through-holes 20 and three guide grooves 30. In a position where the flow groove 40 is not formed or the opening portion 42 is not formed, a connection between the plurality of through-holes 20 may not occur, and a direct connection between the through-hole 20 and the guide groove 30 may not occur.

The side surface of one battery cell 2 is in contact with the plurality of column portions 112, and by forming the flow groove 40 in each of the column portions 112, one battery cell 2 may be in contact with the plurality of flow grooves 40. The number of flow grooves 40 in contact with one through-hole 20 may increase in proportion to the number of column portions 112. The adhesive liquid 3 may be filled inside the flow groove 40.

As the width, height, and number of the flow grooves 40 increase, the flow passage of the adhesive liquid 3 interconnecting the through-hole 20 and the flow grooves 40 may be further expanded. In addition, by forming the flow groove 40, the contact area between the cooling tray 4, the first support portion 11, and the adhesive liquid 3 may be further expanded to correspond to the width, area, and number of the flow grooves 40, compared to an embodiment in which the flow groove 40 is not formed. Accordingly, the bonding force between the battery cell holder 1 and the cooling tray 4 by the adhesive liquid 3 may be further enhanced.

The seating protrusion 50 may be formed to protrude upwardly from an upper surface portion of the second support portion 12. As the second support portion 12 is formed to protrude toward the through-hole 20, the edge portion of the battery cell 2 may be positioned on an upper side of the second support portion 12. The battery cell 2 may be seated directly on the seating protrusion 50 by forming the seating protrusion 50 to protrude upwardly from the upper portion of the second support portion 12.

A bottom surface portion of the second support portion 12 may be positioned at a first reference height S1. In this case, an upper surface portion of the second support portion 12 may be positioned at a second reference height S2. In this case, an upper surface portion of the seating protrusion 50 may be positioned at a third reference height S3. While the bottom surface portion of the battery cell holder 1 according to one embodiment of the present disclosure is positioned at the first reference height S1, the battery cell 2 (e.g., the bottom of the battery cell 2) may be positioned at the third reference height S3.

The second support portion 12 may have the first thickness G1 and the seating protrusion 50 may have the second thickness G2. The flow groove 40 may be formed to be recessed upward by the first thickness G1. A passage and receiving space for the adhesive liquid 3 corresponding to the flow groove 40 may be formed between the second support portions 12. The bonding force between the battery cell holder 1 and the cooling tray 4 may be further enhanced through the flow groove 40. The plurality of through-holes 20 may be connected to communicate with each other at the lower side of the battery cell 2 by the flow groove 40, so that the adhesive liquid 3 may be distributed uniformly throughout the plurality of through-holes 20.

The seating protrusion 50 may have the second thickness G2. While the bottom surface portion of the battery cell 2 is disposed at the third reference height S3, an edge portion of the bottom surface portion of the battery cell 2 may face the second support portion 12 with a separation gap corresponding to the second thickness G2, and a center portion of the bottom surface portion of the battery cell 2 may face the cooling tray 4 with a separation gap corresponding to the sum of the first thickness G1 and the second thickness G2. A gap between the battery cell 2 and the cooling tray 4 may also vary depending on the separation gap between the bottom surface of the battery cell holder 1 and the cooling tray 4.

With reference to FIGS. 8, 9, and 11, the seating protrusion 50 according to one embodiment of the present disclosure may include a protrusion body 51, a first connection portion 52, and a second connection portion 53.

An upper surface portion of the protrusion body 51 may have a shape corresponding to a contact surface with the battery cell 2. The battery cell 2 may have a circumferential shape as a whole, and the bottom surface of the battery cell 2 may have a flat shape. The upper surface portion of the protrusion body 51 may have a flat surface corresponding to the bottom surface of the battery cell 2.

The protrusion body 51 may have a set thickness capable of spacing the lower portion of the battery cell 2 apart from the second support portion 12, and a set width capable of supporting the battery cell 2. The protrusion body 51 may have the shape of a flat piece with a flat upper surface, and may have the second thickness G2. One end of the protrusion body 51 facing the through-hole 20 may form a continuous vertical surface with one end of the second support portion 12.

The first connection portion 52 may be formed on a portion of the protrusion body 51 that faces the second support portion 12. The first connection portion 52 is formed on a lower portion of the protrusion body 51 (e.g., on a surface of the protrusion body 51 that faces and contacts the second support portion 12) and may be integrally connected to the second support portion 12. The second connection portion 53 may be formed on a portion of the protrusion body 51 that faces the first support portion 11. The second connection portion 53 may be formed on a side portion of the protrusion body 51 (e.g., on a surface of the protrusion body 51 that faces and contacts the first support portion 11) and may be integrally connected to the first support portion 11.

The seating protrusion 50 may be positioned at a connection portion between the first support portion 11 and the second support portion 12. The seating protrusion 50 may have a lower portion and a side portion integrally connected to the first support portion 11 and the second support portion 12, respectively, by the first connection portion 52 and the second connection portion 53. Accordingly, the connection portion between the first support portion 11 and the second support portion 12 may be further enhanced in rigidity by the seating protrusion 50. In addition, the first support portion 11 may have a side surface supported by the seating protrusion 50.

According to the embodiment of the present disclosure having the above configuration, since the guide groove 30 forms a passage for the flowable adhesive liquid 3 along the side surface of the battery cell 2, the adhesive liquid 3 may flow upward or downward along the side surface of the battery cell 2 while being guided by the guide groove 30 depending on the pressing force applied when the battery cell 2 is fitted and seated in the cell support 10.

More specifically, during the process of inserting the battery cell 2 into the lower portion of the battery cell holder 1, the adhesive liquid 3 that comes into contact with the side surface of the battery cell 2 may be dispersed and flow upward and downward while being guided by the guide groove 30. Thereafter, during the process in which the battery cell 2 is further moved downwardly until the battery cell 2 is seated in the battery cell holder 1, the adhesive liquid 3 that comes into contact with the lower portion of the battery cell 2 may be pushed to the edge portion of the battery cell 2 and then moved upward while being guided by the guide groove 30.

Such an operation can reduce the resistance caused by the adhesive liquid 3 during the assembly of inserting and seating the battery cell 2 in the battery cell holder 1, and the assembly of the battery cell 2 can be more easily performed.

In addition, according to the embodiment of the present disclosure, after the assembly of seating the battery cell 2 in the battery cell holder 1 is completed, the adhesive liquid 3 may naturally flow downwardly while being guided by the guide groove 30 by the own weight of the adhesive liquid 3, and simultaneously, the air mixed in the adhesive liquid 3 may be discharged through the guide groove 30.

Accordingly, the amount of air mixed in the adhesive liquid 3 can be reduced, thereby minimizing the occurrence of a separation space between the battery cell holder 1, the battery cell 2, and the cooling tray 4 due to the introduction of air. Therefore, the adhesive liquid 3 can be filled tightly and densely in the separation space between the battery cell holder 1, the battery cell 2, and the cooling tray 4, so that the rigidity of the battery module and the battery pack can be further enhanced when the adhesive liquid 3 is cured. In addition, when a thermally conductive material is applied to the adhesive liquid 3, the cooling function through the cooling tray 4 can be further improved.

In addition, according to the embodiment of the present disclosure, the lower portion of the battery cell 2 may not only be in contact with the adhesive liquid 3 filled in the lower portion of the battery cell holder 1, but the side surface of the battery cell 2 may also be in contact with the adhesive liquid 3 filled in the guide groove 30. Accordingly, the bonding force between the battery cell holder 1 and the battery cell 2 can be further enhanced when the adhesive liquid 3 is cured.

In addition, according to the embodiment of the present disclosure, since the flow groove 40 may connect the plurality of through-holes 20 in communication with each other, the adhesive liquid 3 can flow freely between the through-holes 20 through the flow groove 40 in response to the pressing force applied when the battery cell 2 is inserted and seated in the cell support 10. Accordingly, during the assembly of inserting and seating the battery cell 2 in the battery cell holder 1, the resistance caused by the adhesive liquid 3 can be reduced, and the assembly of the battery cell 2 can be more easily performed.

In addition, according to the embodiment of the present disclosure, since the seating protrusion 50 may form the separation gap into which the adhesive liquid 3 can flow between the lower portion of the battery cell 2 and the battery cell holder 1, the bonding between the battery cell holder 1 and the lower portion of the battery cell 2 can be formed more clearly and firmly by the adhesive liquid 3 introduced into a space between the lower portion of the battery cell 2 and the cell support 10.

The battery cell 2 is illustrated in a circumferential shape in the drawings, but the present disclosure is not limited thereto and may be configured in various shapes such as an angled shape or a pouch shape. In addition, a case for the battery cell 2 may be made of metal such as aluminium, an aluminium alloy, nickel-plated steel, or the like, or a laminated film or plastic that forms the pouch.

The present disclosure has been described with reference to the limited embodiments and the drawings, but the present disclosure is not limited thereto. The described embodiments may be changed or modified by those skilled in the art to which the present disclosure pertains within the technical idea of the present disclosure and within the scope equivalent to the appended claims.

Embodiments are set out in the following clauses:
Clause 1. A battery cell holder comprising:
   a cell support to which a plurality of battery cells are fitted and seated;
   a through-hole formed through the cell support and into which an adhesive liquid is introduced; and
   a guide groove formed on the cell support to extend in a seated direction of the battery cell, coming into contact with the through-hole, and configured to form a passage through which the adhesive liquid is flowable along a side surface of the battery cell.
Clause 2. The battery cell holder of clause 1, wherein the cell support comprises:
   a first support portion extending along an edge portion of the battery cell and coming into contact with a side surface of the battery cell; and
   a second support portion formed at a lower portion of the first support portion and coming into contact with a lower portion of the battery cell.
Clause 3. The battery cell holder of clause 2, wherein the first support portion comprises:
   a partition portion formed in a position where the two battery cells face each other, and having a form of a fence capable of partitioning a disposition space of the plurality of battery cells; and
   a column portion formed in a position where the three or more battery cells face each other, and having a form of a column higher than the partition portion.
Clause 4. The battery cell holder of clause 3, wherein the column portion comprises:
   a lower column portion having a shape corresponding to a separation space between the battery cells; and
   an upper column portion formed on an upper portion of the lower column portion, and having a shape that narrows in width toward an upper portion.
Clause 5. The battery cell holder of clause 4, wherein the partition portion is formed with a first height, the lower column portion has a second height higher than the first height, and the upper column portion has a third height higher than the second height.
Clause 6. The battery cell holder of clause 4 or clause 6, wherein the upper column portion comprises an inclined surface formed to be inclined in a position facing the battery cell.
Clause 7. The battery cell holder of clause 6, wherein the guide groove is formed to extend continuously from the lower column portion to the inclined surface.
Clause 8. The battery cell holder of any one of clauses 3 to 7, wherein the guide groove comprises:
   a first guide groove formed in a portion of the column portion facing a first battery cell; and
   a second guide groove formed in a portion of the column portion facing a second battery cell.
Clause 9. The battery cell holder of any one of clauses 2 to 8, wherein the cell support further comprises a third support portion, which has a height higher than the second support portion and extends along a direction of arrangement of the battery cell and is in contact with a side surface of the battery cell.
Clause 10. The battery cell holder of clause 9, wherein the battery cells comprise:
   a first row in which a first battery cell and a second battery cell are arranged in a first direction; and
   a second row disposed adjacent to the first row, and in which a third battery cell and a fourth battery cell are arranged in the first direction and the third battery cell and the fourth battery cell are disposed in a zigzag configuration with the first battery cell and the second battery cell, and
   the third support portion comprises:
      a first curved portion curved along a side surface of the first battery cell and extending between the first battery cell and the third battery cell;
      a second curved portion curved along a side surface of the third battery cell and extending between the second battery cell and the third battery cell; and
      a third curved portion curved along a side surface of the second battery cell and extending between the second battery cell and the fourth battery cell.
Clause 11. The battery cell holder of clause 10, wherein the first curved portion is curved in a second direction and in contact with the first support portion in the second direction, and
   the second curved portion is curved in a third direction and in contact with the first support portion in the third direction.
Clause 12. The battery cell holder of any one of clauses 9 to 11, wherein the third support portion comprises:
   an extension wall portion extending along the direction of arrangement of the battery cell; and
   an extension column portion extending upward from the first support portion and connected to a side surface of the extension wall portion.
Clause 13. The battery cell holder of any one of clauses 1 to 12, further comprising a flow groove formed to be recessed in a lower portion of the cell support, coming into contact with the plurality of through-holes, and configured to form a passage through which the adhesive liquid is flowable from one of the through-holes to the other of the through-holes.
Clause 14. The battery cell holder of clause 13, wherein the cell support comprises:
   a partition portion having a form of a fence capable of partitioning a disposition space of the battery cell; and
   a column portion having a form of a column capable of filling a separation space between the battery cells and in which the guide groove is formed, and
   the flow groove is formed in a lower portion of the column portion to communicate with the guide groove.
Clause 15. The battery cell holder of clause 14, wherein the flow groove comprises:
   a recessed portion formed to be recessed upward in a lower portion of the column portion; and
   an opening portion formed to be open in a transverse direction in a side portion of the recessed portion, and coming into contact with the through-hole and the guide groove.
Clause 16. The battery cell holder of clause 15, wherein the opening portion comprises:
   a first opening portion formed to be open in a first portion of the recessed portion and coming into contact with one of the plurality of guide grooves; and
   a second opening portion formed to be open in a second portion of the recessed portion and coming into contact with another of the plurality of guide grooves.
Clause 17. The battery cell holder of any one of clauses 1 to 16, further comprising a seating protrusion formed to protrude upward on the cell support, and configured to form a separation space between a lower portion of the battery cell and the cell support to allow the adhesive liquid to be introduced.
Clause 18. The battery cell holder of clause 17, wherein the cell support comprises:
   a first support portion coming into contact with a side surface of the battery cell; and
   a second support portion coming into contact with the lower portion of the battery cell, and
   the seating protrusion is formed on an upper surface portion of the second support portion.
Clause 19. The battery cell holder of clause 18, wherein the seating protrusion comprises:
   a protrusion body having a set thickness that allows the lower portion of the battery cell to be spaced from the second support portion, and a set width that allows the battery cell to be supported;
   a first connection portion formed in a lower portion of the protrusion body and connected to the second support portion; and
   a second connection portion formed in a side portion of the protrusion body and connected to the first support portion.
Clause 20. The battery cell holder of clause 18 or clause 19, wherein the second support portion comprises:
   a rigidity reinforcing portion having the seating protrusion formed on an upper portion thereof; and
   an adhesive reinforcing portion formed on one side or both sides of the rigidity reinforcing portion, spaced apart from the lower portion of the battery cell, and having the adhesive liquid introduced into a space between the adhesive reinforcing portion and the battery cell, and
   a separation space between the adhesive reinforcing portion and the battery cell is in contact with the through-hole.

## Claims

1. A battery cell holder comprising:
a cell support configured to fit and seat a plurality of battery cells;
a through-hole formed through the cell support and into which an adhesive liquid is capable of being introduced; and
a guide groove formed on the cell support to extend in a seated direction of the battery cell, coming into contact with the through-hole, and configured to form a passage through which the adhesive liquid is flowable along a side surface of the battery cell.

2. The battery cell holder as claimed in claim 1, wherein the cell support comprises:
a first support portion extending along an edge portion of the battery cell and coming into contact with a side surface of the battery cell; and
a second support portion formed at a lower portion of the first support portion and coming into contact with a lower portion of the battery cell.

3. The battery cell holder as claimed in claim 2, wherein the first support portion comprises:
a partition portion formed in a position where the two battery cells face each other, and having a form of a fence capable of partitioning a disposition space of the plurality of battery cells; and
a column portion formed in a position where the three or more battery cells face each other, and having a form of a column higher than the partition portion.

4. The battery cell holder as claimed in claim 3, wherein the column portion comprises:
a lower column portion having a shape corresponding to a separation space between the battery cells; and
an upper column portion formed on an upper portion of the lower column portion, and having a shape that narrows in width toward an upper portion.

5. The battery cell holder as claimed in claim 4, wherein the upper column portion comprises an inclined surface formed to be inclined in a position facing the battery cell.

6. The battery cell holder as claimed in claim 5, wherein the guide groove is formed to extend continuously from the lower column portion to the inclined surface.

7. The battery cell holder as claimed in any one of claims 2 to 6, wherein the cell support further comprises a third support portion, which has a height higher than the second support portion and extends along a direction of arrangement of the battery cell and is in contact with a side surface of the battery cell.

8. The battery cell holder as claimed in claim 7, wherein the battery cells comprise:
a first row in which a first battery cell and a second battery cell are arranged in a first direction; and
a second row disposed adjacent to the first row, and in which a third battery cell and a fourth battery cell are arranged in the first direction and the third battery cell and the fourth battery cell are disposed in a zigzag configuration with the first battery cell and the second battery cell, and
the third support portion comprises:
a first curved portion curved along a side surface of the first battery cell and extending between the first battery cell and the third battery cell;
a second curved portion curved along a side surface of the third battery cell and extending between the second battery cell and the third battery cell; and
a third curved portion curved along a side surface of the second battery cell and extending between the second battery cell and the fourth battery cell.

9. The battery cell holder as claimed in claim 7 or claim 8, wherein the third support portion comprises:
an extension wall portion extending along the direction of arrangement of the battery cell; and
an extension column portion extending upward from the first support portion and connected to a side surface of the extension wall portion.

10. The battery cell holder as claimed in any one of claims 1 to 9, further comprising a flow groove formed to be recessed in a lower portion of the cell support, coming into contact with the plurality of through-holes, and configured to form a passage through which the adhesive liquid is flowable from one of the through-holes to the other of the through-holes.

11. The battery cell holder as claimed in claim 10, wherein the cell support comprises:
a partition portion having a form of a fence capable of partitioning a disposition space of the battery cell; and
a column portion having a form of a column capable of filling a separation space between the battery cells and in which the guide groove is formed, and
the flow groove is formed in a lower portion of the column portion to communicate with the guide groove.

12. The battery cell holder as claimed in claim 11, wherein the flow groove comprises:
a recessed portion formed to be recessed upward in a lower portion of the column portion; and
an opening portion formed to be open in a transverse direction in a side portion of the recessed portion, and coming into contact with the through-hole and the guide groove.

13. The battery cell holder as claimed in any one of claims 1 to 12, further comprising a seating protrusion formed to protrude upward on the cell support, and configured to form a separation space between a lower portion of the battery cell and the cell support to allow the adhesive liquid to be introduced.

14. The battery cell holder as claimed in claim 13, wherein the cell support comprises:
a first support portion coming into contact with a side surface of the battery cell; and
a second support portion coming into contact with the lower portion of the battery cell, and
the seating protrusion is formed on an upper surface portion of the second support portion.

15. The battery cell holder as claimed in claim 14, wherein the seating protrusion comprises:
a protrusion body having a set thickness that allows the lower portion of the battery cell to be spaced from the second support portion, and a set width that allows the battery cell to be supported;
a first connection portion formed in a lower portion of the protrusion body and connected to the second support portion; and
a second connection portion formed in a side portion of the protrusion body and connected to the first support portion.
